# EUROPEAN PATENT SPECIFICATION

(11) **EP 3 893 344 B1**
(45) Date of publication and mention of the grant of the patent: **24.06.2026**
(21) Application number: 20168198.8
(22) Date of filing: 06.04.2020
(51) Int. Cl.: H02H 3/08, H02J 3/00

(54) **FAULT LEVEL MONITORING IN ELECTRICAL POWER SYSTEMS**
FEHLERNIVEAUÜBERWACHUNG IN ELEKTRISCHEN ENERGIESYSTEMEN
SURVEILLANCE DE NIVEAU DE DÉFAILLANCE DANS DES SYSTÈMES D'ALIMENTATION ÉLECTRIQUE

(43) Date of publication of application: 13.10.2021
(73) Proprietor: ABB Schweiz AG, 5400 Baden (CH)
(72) Inventor: Backman, Magnus, 722 46 Västerås (SE); Eriksson, Thomas, 743 86 Bälinge (SE); Liljestrand, Lars, 722 42 Västerås (SE); Bengtsson, Tord, 723 49 Västerås (SE)
(74) Representative: Kransell & Wennborg KB

(56) References cited:
- CN-A- 108 400 593
- US-A- 5 581 433
- US-A1- 2017 059 639
- US-A1- 2020 041 548

## Description

### Field of the Invention

The present invention relates to a method for fault level monitoring in an electrical power system. The present invention further relates to a control unit configured to monitor a fault level in an electrical power system, and to an electric measurement system configured to monitor a fault level in an electrical power system.

### Background

Distributed electrical power networks are provided for distribution of electrical power from a power generation source to various infrastructures. In order to ensure a stable and safe operation of the distributed electrical power networks, they are often monitored for detecting faults such as short circuit incidents.

Faults levels in the networks are often calculated based on network data. However, with the increasing use of weather dependent power generation, more varying fault levels may occur in the system. It is especially interesting to understand if the fault level is below the rating of installed switchgear and other components in the network. This also provides information of whether further power generation sources can be installed without having to reinforce the system.

Attempts for detecting the fault levels have been made using dedicated equipment that is installed in the electrical power networks. However, such dedicated equipment is often costly and may add complexity to the distributed electrical power networks. US2020/041548 discloses an example method and system for measuring short-circuit capacity of a power grid, and US2017/059639 discloses a monitoring system for a capacity bank.

Accordingly, it is desirable to detect fault levels in electrical power networks with reduced need for dedicated equipment.

### Summary

In view of the above-mentioned and other drawbacks of the prior art, it is an object of the present invention to provide a method for fault level monitoring that can measure the fault level using existing devices in the electrical power system.

According to a first aspect of the invention as defined in the independent claim 1, there is provided a method for fault level monitoring in an electrical power system electrically connectable to a capacitor bank, the method comprises: causing a switching operation for electrically connecting the capacitor bank to the electric power system, measuring an electric characteristic caused by the switching operation at the capacitor bank, characterized in that the electric characteristic is a frequency or a frequency variation of a transient inrush current or transient voltage caused by the switching operation, and determining a fault level in the electric power system based on the electric characteristic.

The present invention is at least partly based on the realization that a fault level in the electric power system can be measured by analyzing the switching operation of capacitor banks of the electric power system.

A capacitor bank comprises a group of capacitors connected in series and/or in parallel depending on the specific implementation.

A fault level generally describes a deviation from a normal operation state of the electric power system, i.e. without a fault. A fault level may be proportional to a deviation of the electrical characteristic from the electrical characteristic at a normal operation state of the electrical power system.

A fault level may relate to a short circuit current or power in the electric power system. Generally, an electric power system has a maximum short circuit power or current that depends on the configuration and the number of power sources in the system and on the present operation state of the electric power system. The fault level may thus be a snap-shot of this maximum short circuit power or current that can occur. Once a fault level is determined, it provides information of e.g. a short circuit power or current level in the event of a failure in the system. It is desirable to ensure that short circuit protection devices in the electric power system are properly rated for the short circuit power or current level.

An example level of a short circuit current for example electric power systems is in the order of thousands of amperes, such as e.g. 5-50 kA.

The capacitor banks are generally used for controlling the level of voltage supplied from e.g. a substation of the electric power system. In other words, they are already installed in the electric power system. Consequently, by analyzing switching operations, for connecting and disconnecting the capacitor banks to/from the electric power system, for detecting fault levels, no additional hardware must be installed in the electric power system. Only existing hardware is used. Accordingly, the capacitor bank is advantageously comprised in the electrical power system. An electrical power system may be a grid network of power consumers and power sources. The electric power system may be a distributed electrical power network for distribution of electrical power from a power generation source to infrastructures.

When a capacitor bank is being connected to the electric power system, the electrical characteristic of the current and voltage at the capacitor bank depends on a short circuit inductance in the system and the capacitance of the capacitor bank. Since the capacitance of the capacitor bank is known, the electrical characteristic may primarily depend on the short circuit inductance.

For example, in one embodiment of the invention, the electric characteristic is a frequency of a transient current or transient voltage caused by the switching operation. Thus, since the capacitance of the capacitor bank is known, the frequency, which may be given as a resonance frequency, is due to the short circuit inductance. The transient current is an inrush current from the electrical power system to the capacitor bank when the capacitor bank is being connected to the electric power system by the switching operation.

In one possible implementation, the electric characteristic is a variation in resonance frequency. The variation in resonance frequency is due to the change in short circuit inductance caused by a fault, i.e. a short circuit, in the system. The fault level may be proportional to the variation of the resonance frequency from a resonance frequency in case of a normal operation state of the electrical power system. Further, the evolution of the short circuit power or current levels may be tracked by performing consecutive measurements of fault levels and studying the variation of the resonance frequency between consecutive measurements. In this way, the electric system may be monitored over time whereby when the fault levels exceed the rating of installed switchgear and other components in the electric system, suitable actions may be taken such as replacement of components.

As mentioned above, the fault level may be a short circuit power or current level in the electric power system. Thus, by studying the power of the electrical characteristics provided in the form of a frequency dependent power spectrum, it can be concluded if the acquired power spectrum deviates from one acquired from an electrical power system with no or negligible short circuit power. Further, the change in fault levels over time may be monitored by tracking the change between consecutively acquired power spectrums.

In one embodiment, the fault level may be determined based on the electric characteristic and predetermined information about the configuration of the electric power system. By having prior knowledge of the configuration of the electric power system, it is possible to also have prior knowledge of the electrical characteristics determined for the system with low fault levels and therefore detecting a fault level can be performed with higher accuracy. In other words, having prior knowledge of the configuration of the electric power system, it is possible to predict to some extent what the electrical characteristics may be for some fault levels, and therefore detection of actual fault levels may be alleviated.

In another embodiment, the fault level may be determined based on a comparison of the electric characteristic to a predetermined library of electric characteristics for predetermined electric power system configurations. The library thus comprises prior data describing the electric characteristics from prior switching operations at different electric power system configurations. Such a library may be used for a straight-forward comparison e.g. as a look-up table or map, for fast estimates of fault levels.

In other embodiments, with the library it is possible to use machine learning algorithms for detecting a fault level, or how a fault levels variation. Thus, in embodiments, the fault level may be determined by a machine learning algorithm trained on prior switching operations for multiple different electric power system configurations. The machine learning algorithm may thus train on the library to understand how fault levels varies depending on the configuration of the electric power system and the at the capacitor bank caused by the switching operation. As the library grows, the machine learning algorithm may improve its fault level estimation accuracy.

Example machine learning algorithms include for example clustering and classification machine learning algorithms. A classification machine learning algorithm is generally based on supervised learning to train the algorithm to identify data to be in one of several classes. Classification machine learning algorithms include e.g. support vector machines, nearest neighbor algorithms, decision trees, random forest, etc. Example clustering machine learning algorithms include e.g. K-means clustering, density-based clustering, grid based clustering, etc. It is understood that clustering and classification machine learning algorithms are *per se* known to the skilled person and will not be described in more detail herein. Further clustering and classification machine learning algorithms not mentioned herein are also conceivable. The precise machine learning algorithm that is used may depend on specific implementation details.

In yet another embodiment not part of the present invention, the electric characteristic may be a voltage level variation in the electric power system caused by connecting the capacitor bank to the electric power system. In other words, detecting a change in fault level may advantageously be monitored by measuring a voltage variation such as a voltage increase when the capacitor bank is connected to the electrical power system.

The switching of the capacitor bank may be realized in various ways. In one possible implementation, the method may comprise controlling a relay for causing the switching operation. Such as relay is connected between connection leads of the capacitor bank and connection leads of the electric power system. The relay is adapted to connect and disconnect the capacitor bank to/from the electric power system.

In possible implementations, the electrical power system may be an electrical power distribution network, and wherein the capacitor bank may be located in an electrical substation of the electrical power distribution network. Such substations are configured to receive power and distribute it downstream to selected infrastructure. A substation is further configured to transform voltage from high voltage to low voltage or from low voltage to high voltage. An typical electrical substation may be adapted to receive voltage in the range of e.g. 10 kV to 250 kV.

According to a second aspect of the invention as defined in independent claim 9, there is provided a control unit configured to monitor a fault level in an electrical power system electrically connectable to a capacitor bank, the control unit is configured to: in response to a switching operation connecting the capacitor bank to the electric power system, determine an electric characteristic caused by the switching operation at the capacitor bank, characterized in that the electric characteristic is a frequency or a frequency variation of a transient inrush current or transient voltage caused by the switching operation, and determine a fault level in the electric power system based on the electric characteristic.

The control unit may be configured to receive a signal indicative of a voltage transient or current transient at the capacitor bank from an electric sensor arrangement, wherein the control unit is configured to determine the electric characteristic based on the signal.

The control unit may advantageously be configured to determine the fault level based on a comparison of the electric characteristic to a predetermined library of electric characteristics for multiple different electric power system configurations, the predetermined library being stored in a memory device.

In some advantageous embodiments, the control unit may be configured to operate a machine learning algorithm trained on prior switching operations for multiple different electric power system configurations for determining the fault level.

Further effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 is a flow-chart of method steps according to embodiments of the invention;
Fig. 2 conceptually illustrates a capacitor bank connected to an electrical power distribution bus via a switching device according to an embodiment of the invention; and
Fig. 3 is a block-diagram describing a control unit configured to monitor a fault level in an electrical power system electrically connectable to a capacitor bank.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

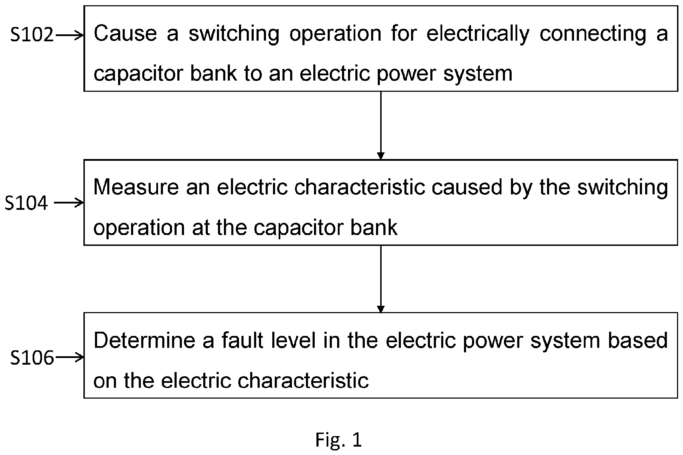

Fig. 1 is a flow-chart of method steps according to embodiments of the invention. The method steps provide for fault level monitoring in an electrical power system electrically connectable to a capacitor bank.

In step S102, causing a switching operation for electrically connecting the capacitor bank to the electric power system. The switching operation electrically connects the capacitor bank to the electric power system by suitable switching arrangements such as relays. The switching operation may be initiated by a control unit for measuring a fault level. Further, the switching operation may be initiated for carrying out normal operation processes for the capacitor bank, whereby the method disclosed herein are executed simultaneously, while the switching operation for the capacitor bank is anyway occurring. The method may comprise controlling a switching device such as a relay for causing the switching operation. The capacitor bank may advantageously be comprised in the electrical power system.

Further, in step S104, measuring an electric characteristic caused by the switching operation at the capacitor bank. The electrical characteristics may be measured in various ways. The location of the capacitor bank, e.g. at a substation of the electrical power system, often include, monitoring systems for continuously monitoring the status of the substation. The measurements performed by such monitoring systems may be used for measuring the electrical characteristic. In some embodiments, the electrical characteristics is related to a frequency of transient currents at the capacitor bank when it is connected to the electrical power system. In such case, a network analyzer type arrangement or transient recorder systems are conceivable for measuring the frequency and power of the transient current. Such measurement arrangements for measuring power spectrums or transients are known *per se* to the skilled person and will not be described in more detail herein.

Subsequently, in step S106, determining a fault level in the electric power system based on the electric characteristic. The fault level may be determined in various ways as will be described in further detail herein. The fault level may reflect the short circuit power of the electrical power system.

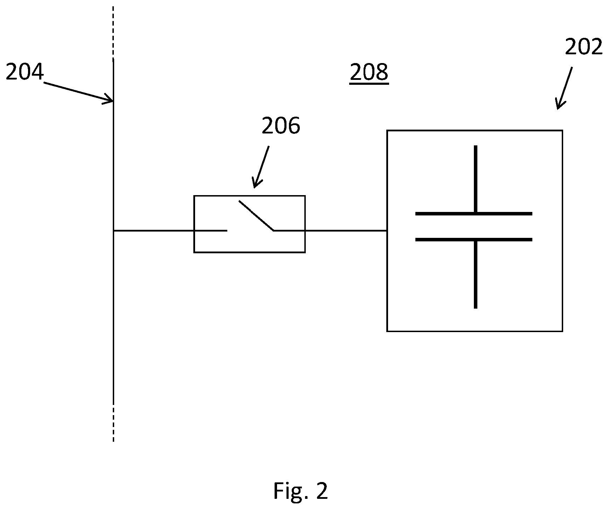

Fig. 2 conceptually illustrates a capacitor bank 202 connected to an electrical power distribution bus 204 via a switching device 206. The capacitor bank 202 may be provided in various configurations that depend on the specific implementation. For example, a capacitor bank may be provided in a grounded wye, un-grounded wye, delta connected, or H configurations, each comprising individual capacitors connected in series and/or in parallel in different ways and often arranged in a steel enclosure as required by the implementation at hand. The capacitor bank 200 may be configured for power factor correction for the grid.

Capacitor banks and different configurations thereof are known *per se* to the skilled person and will not be discussed in more detail herein.

The electrical power distribution bus 204 may be a multiple phase distribution bus. The electrical power distribution bus 204 is part of an electrical power distribution network or grid for distributing electrical power to infrastructure in the area of the electrical power distribution network. The capacitor bank 202 may comprise sets of capacitors connected to a respective one of the individual phases of the distribution bus 204. The capacitor bank 202 may be arranged in a substation 208 of the electrical power distribution network.

The switching device 206, e.g. a circuit breaker, may be any switching device generally known for electrically connecting and electrically disconnecting a capacitor bank 202 to a distribution bus 204. Such a switching device 206 is already installed at the substation of the electrical power distribution network and is controllable for connecting the capacitor bank 202 to the distribution bus 204, and for disconnecting the capacitor bank 202 to the distribution bus 204 in a suitable manner. The inventive concept described herein concerns studying the electrical characteristics at the capacitor bank caused by such switching operations.

Naturally, the electrical characteristics measured at the capacitor bank depends in the electrical properties of the capacitor bank 202 itself, but also on the electrical properties and configuration of the electric power system. The electrical properties of the capacitor bank can be predetermined, since for example, it is possible to determine the capacitance of the capacitor bank.

Further, the configuration of the electric power system can be predetermined prior to determining fault levels. For example, one may study or estimate the electrical characteristics of the electric power system having low or negligible fault levels. A fault level in the electric power system will alter the electrical properties of the electric power system, for example, a short circuit may alter the inductance of the electrical power system, as seen by the capacitor bank 202. Consequently, the electrical characteristics measured at the capacitor bank is altered as compared to the electrical characteristics of the electric power system having low or negligible fault levels.

Generally, in a circuit in which the capacitance is fixed, and the inductance is altered, the resonance frequency of that circuit is varied. This understanding is used for at least some embodiments of the present invention. Accordingly, the electric characteristic may be a frequency, or a variation of the frequency, of a transient inrush current to the capacitor bank, or transient voltage caused by the switching operation. The transient inrush current or voltage may be measured by transient recorders or from existing relay protection devices in the system. A relay protection device is generally already installed in existing substations and may advantageously be used for detecting the transient inrush current to the capacitor bank, e.g. as a transient recorder.

In other embodiments not part of the present invention, the electric characteristic may be a voltage level variation in the electric power system caused by connecting the capacitor bank to the electric power system. For example, if a 10 MVA capacitor bank is connected to a point in the electric power system is 1000 MVA, will result in a 1% voltage increase, as provided by 10 MVA divided by 1000 MVA. If the short circuit power has increased to1100 MVA the voltage increase is altered to 0.91%. Such a voltage change may be detected by a high precision AC system from existing relay protection devices in the system.

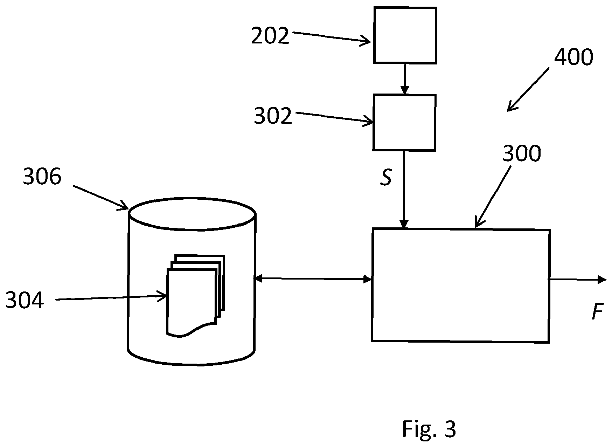

Fig. 3 conceptually illustrates a control unit 300 configured to monitor a fault level in an electrical power system electrically connectable to a capacitor bank 202. The control unit 300 is configured to, in response to a switching operation connecting the capacitor bank 202 to the electric power system, determine an electric characteristic at the capacitor bank 202 caused by the switching operation. In other words, the capacitor bank 202 receives sensing signals S from an electric sensing arrangement 302 configured to measure electrical current and/or voltage at the capacitor bank 202. Based on the sensing signal, the control unit determine an electric characteristic. The sensing signal may be indicative of a voltage transient or current transient at the capacitor bank, or a voltage change.

Further, the control unit 300 is configured to determine a fault level F in the electric power system based on the electric characteristic determined based on the sensing signal S.

In embodiments, the control unit is configured to determine the fault level F based on a comparison of the electric characteristic to a predetermined library 304 of electric characteristics for multiple different electric power system configurations, the predetermined library being stored in a memory device 306. Thus, the control unit 300 may have prior knowledge of the electric power system configuration of the present electric power system and based on the prior knowledge the control unit may search for a matching or at least substantially electric characteristic in a sub-set of the library 304. When a match is found, the fault level for the respective electric characteristic may be determined from the library 304. This search procedure in the library represents a possible way of using the library 304.

However, in preferred embodiments, the fault level *F* may be determined by a machine learning algorithm trained on prior switching operations for multiple different electric power system configurations. In other words, the control unit 300 operates a machine learning algorithm that is being fed by the electric characteristic as an input parameter, then processes the electric characteristic in the machine learning algorithm being trained on a training set of data given by the library. The output from the machine learning algorithm is the estimated fault level F. Using a machine learning algorithm enables for an algorithm that improves the accuracy of the estimated fault level the more it is being trained. For this, the library 304 may comprise electric characteristics caused by switching operations for different electric power system configurations, and power production from various generations sites. An electric power system configuration is related to the layout and/or electrical setup of the electric power system and may be of various forms. For example, different electric power system configurations may include e.g. systems running with different parallel or individual busses, splitting network configurations, radial networks, ring networks, or meshed networks, etc., *per* se known to the skilled person.

There is further provided, now turning again to fig. 3, an electric measurement system 400 configured to monitor a fault level in an electrical power system electrically connectable to a capacitor bank, the electric measurement system comprises: an electric sensor arrangement 302 connectable to the capacitor bank for measuring an electric characteristic in response to a switching operation for electrically connecting the capacitor bank to the electric power system. The electric measurement system is configured to determine a fault level in the electric power system based on the electric characteristic.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for fault level monitoring in an electrical power system electrically connectable to a capacitor bank (202), the method comprising:
causing (S102) a switching operation for electrically connecting the capacitor bank to the electric power system,
measuring (S104) an electric characteristic caused by the switching operation at the capacitor bank, **characterized in that:**
the electric characteristic is a frequency or a frequency variation of a transient inrush current or transient voltage caused by the switching operation, and
determining (S106) a fault level in the electric power system based on the electric characteristic.

2. The method according to claim 1, wherein the fault level is determined based on the electric characteristic and predetermined information about the configuration of the electric power system.

3. The method according to any one of claims 1 and 2, wherein the fault level is determined based on a comparison of the electric characteristic to a predetermined library of electric characteristics for predetermined electric power system configurations.

4. The method according to any one of the preceding claims, wherein the fault level is determined by a machine learning algorithm trained on prior switching operations for multiple different electric power system configurations.

5. The method according to any one of the preceding claims, wherein the capacitor bank is comprised in the electrical power system.

6. The method according to any one of the preceding claims, wherein the fault level is a short circuit power level in the electric power system.

7. The method according to any one of the preceding claims, comprising controlling a relay for causing the switching operation.

8. The method according to any one of the preceding claims, wherein the electrical power system is an electrical power distribution network, and wherein the capacitor bank is located in a substation (208) of the electrical power distribution network.

9. A control unit (300) configured to monitor a fault level in an electrical power system electrically connectable to a capacitor bank, the control unit is configured to:
in response to a switching operation connecting the capacitor bank to the electric power system, determine an electric characteristic caused by the switching operation at the capacitor bank, **characterized in that**
the electric characteristic is a frequency or a frequency variation of a transient inrush current or transient voltage caused by the switching operation, and
determine a fault level in the electric power system based on the electric characteristic.

10. The control unit according to claim 9, configured to receive a signal indicative of a voltage transient or current transient at the capacitor bank from an electric sensor arrangement, wherein the control unit is configured to determine the electric characteristic based on the signal.

11. The control unit according to any one of claims 9 and 10, configured to determine the fault level based on a comparison of the electric characteristic to a predetermined library of electric characteristics for multiple different electric power system configurations, the predetermined library being stored in a memory device.

12. The control unit according to any one of claims 9 to 11, configured to operate a machine learning algorithm trained on prior switching operations for multiple different electric power system configurations for determining the fault level.

## Patentansprüche

1. Verfahren zur Fehlerpegelüberwachung in einem elektrischen Energiesystem, das elektrisch mit einer Kondensatorbank (202) verbindbar ist, wobei das Verfahren Folgendes umfasst:
Bewirken (S102) eines Schaltvorgangs zum elektrischen Verbinden der Kondensatorbank mit dem elektrischen Energiesystem,
Messen (S104) einer elektrischen Charakteristik, die durch den Schaltvorgang an der Kondensatorbank verursacht wird, **dadurch gekennzeichnet, dass**:
die elektrische Charakteristik eine Frequenz oder eine Frequenzvariation eines transienten Einschaltstroms oder einer transienten Spannung ist, der bzw. die durch den Schaltvorgang verursacht wird, und
Bestimmen (S106) eines Fehlerpegels in dem elektrischen Energiesystem basierend auf der elektrischen Charakteristik.

2. Verfahren nach Anspruch 1, wobei der Fehlerpegel basierend auf der elektrischen Charakteristik und vorbestimmten Informationen über die Konfiguration des elektrischen Energiesystems bestimmt wird.

3. Verfahren nach einem der Ansprüche 1 und 2, wobei der Fehlerpegel basierend auf einem Vergleich der elektrischen Charakteristik mit einer vorbestimmten Bibliothek elektrischer Charakteristiken für vorbestimmte elektrische Energiesystemkonfigurationen bestimmt wird.

4. Verfahren nach einem der vorhergehenden Ansprüche, wobei der Fehlerpegel durch einen Maschinenlernalgorithmus bestimmt wird, der an vorherigen Schaltvorgängen für mehrere verschiedene elektrische Energiesystemkonfigurationen trainiert ist.

5. Verfahren nach einem der vorhergehenden Ansprüche, wobei die Kondensatorbank in dem elektrischen Energiesystem enthalten ist.

6. Verfahren nach einem der vorhergehenden Ansprüche, wobei der Fehlerpegel ein Kurzschlussleistungspegel in dem elektrischen Energiesystem ist.

7. Verfahren nach einem der vorhergehenden Ansprüche, umfassend Steuern eines Relais zum Bewirken des Schaltvorgangs.

8. Verfahren nach einem der vorhergehenden Ansprüche, wobei das elektrische Energiesystem ein elektrisches Energieverteilungsnetzwerk ist, und wobei sich die Kondensatorbank in einem Umspannwerk (208) des elektrischen Energieverteilungsnetzwerks befindet.

9. Steuereinheit (300), die dazu ausgelegt ist, einen Fehlerpegel in einem elektrischen Energiesystem zu überwachen, das elektrisch mit einer Kondensatorbank verbindbar ist, wobei die Steuereinheit ausgelegt ist zum:
als Reaktion auf einen Schaltvorgang, der die Kondensatorbank mit dem elektrischen Energiesystem verbindet, Bestimmen einer elektrischen Charakteristik, die durch den Schaltvorgang an der Kondensatorbank verursacht wird, **dadurch gekennzeichnet, dass**
die elektrische Charakteristik eine Frequenz oder eine Frequenzvariation eines transienten Einschaltstroms oder einer transienten Spannung ist, der bzw. die durch den Schaltvorgang verursacht wird, und
Bestimmen eines Fehlerpegels in dem elektrischen Energiesystem basierend auf der elektrischen Charakteristik.

10. Steuereinheit nach Anspruch 9, die dazu ausgelegt ist, ein Signal zu empfangen, das eine Spannungstransiente oder eine Stromtransiente an der Kondensatorbank angibt, von einer elektrischen Sensoranordnung, wobei die Steuereinheit dazu ausgelegt ist, die elektrische Charakteristik basierend auf dem Signal zu bestimmen.

11. Steuereinheit nach einem der Ansprüche 9 und 10, die dazu ausgelegt ist, den Fehlerpegel basierend auf einem Vergleich der elektrischen Charakteristik mit einer vorbestimmten Bibliothek von elektrischen Charakteristiken für mehrere verschiedene elektrische Energiesystemkonfigurationen zu bestimmen, wobei die vorbestimmte Bibliothek in einer Speichervorrichtung gespeichert ist.

12. Steuereinheit nach einem der Ansprüche 9 bis 11, die dazu ausgelegt ist, einen Maschinenlernalgorithmus zu betreiben, der an vorherigen Schaltvorgängen für mehrere verschiedene elektrische Energiesystemkonfigurationen zum Bestimmen des Fehlerpegels trainiert ist.

## Revendications

1. Procédé de surveillance d'un niveau de défaut dans un système d'énergie électrique apte à être raccordé électriquement à une batterie de condensateurs (202), le procédé comprenant :
le déclenchement (S102) d'une opération de commutation afin de raccorder électriquement la batterie de condensateurs au système d'énergie électrique,
la mesure (S104) d'une caractéristique électrique résultant de l'opération de commutation au niveau de la batterie de condensateurs, **caractérisé en ce que** :
la caractéristique électrique est une fréquence ou une variation de fréquence d'un courant d'appel transitoire ou d'une tension transitoire résultant de l'opération de commutation, et
la détermination (S106) d'un niveau de défaut dans le système d'énergie électrique sur la base de la caractéristique électrique.

2. Procédé selon la revendication 1, dans lequel le niveau de défaut est déterminé sur la base de la caractéristique électrique et d'informations prédéterminées concernant la configuration du système d'énergie électrique.

3. Procédé selon l'une quelconque des revendications 1 et 2, dans lequel le niveau de défaut est déterminé sur la base d'une comparaison de la caractéristique électrique avec une bibliothèque prédéterminée de caractéristiques électriques pour des configurations prédéterminées du système d'énergie électrique.

4. Procédé selon l'une quelconque des revendications précédentes, dans lequel le niveau de défaut est déterminé par un algorithme d'apprentissage automatique entraîné sur des opérations de commutation antérieures pour de multiples configurations différentes du système d'énergie électrique.

5. Procédé selon l'une quelconque des revendications précédentes, dans lequel la batterie de condensateurs est comprise dans le système d'énergie électrique.

6. Procédé selon l'une quelconque des revendications précédentes, dans lequel le niveau de défaut est un niveau de puissance de court-circuit dans le système d'énergie électrique.

7. Procédé selon l'une quelconque des revendications précédentes, comprenant la commande d'un relais afin de déclencher l'opération de commutation.

8. Procédé selon l'une quelconque des revendications précédentes, dans lequel le système d'énergie électrique est un réseau de distribution d'énergie électrique, et dans lequel la batterie de condensateurs est située dans un poste (208) du réseau de distribution d'énergie électrique.

9. Unité de commande (300) configurée pour surveiller un niveau de défaut dans un système d'énergie électrique apte à être raccordé électriquement à une batterie de condensateurs, l'unité de commande étant configurée pour :
en réponse à une opération de commutation raccordant la batterie de condensateurs au système d'énergie électrique, déterminer une caractéristique électrique résultant de l'opération de commutation au niveau de la batterie de condensateurs, **caractérisé en ce que**
la caractéristique électrique est une fréquence ou une variation de fréquence d'un courant d'appel transitoire ou d'une tension transitoire résultant de l'opération de commutation, et
déterminer un niveau de défaut dans le système d'énergie électrique sur la base de la caractéristique électrique.

10. Unité de commande selon la revendication 9, configurée pour recevoir un signal indiquant une tension transitoire ou un courant transitoire au niveau de la batterie de condensateurs à partir d'un agencement de capteur électrique, l'unité de commande étant configurée pour déterminer la caractéristique électrique sur la base du signal.

11. Unité de commande selon l'une quelconque des revendications 9 et 10, configurée pour déterminer le niveau de défaut sur la base d'une comparaison de la caractéristique électrique avec une bibliothèque prédéterminée de caractéristiques électriques pour de multiples configurations différentes du système d'énergie électrique, la bibliothèque prédéterminée étant stockée dans un dispositif de mémoire.

12. Unité de commande selon l'une quelconque des revendications 9 à 11, configurée pour mettre en œuvre un algorithme d'apprentissage automatique entraîné sur des opérations de commutation antérieures pour de multiples configurations différentes du système d'énergie électrique afin de déterminer le niveau de défaut.
